# EUROPÄISCHE PATENTSCHRIFT

(11) **EP 1 886 850 B1**
(45) Veröffentlichungstag und Bekanntmachung des Hinweises auf die Patenterteilung: **08.04.2009**
(21) Anmeldenummer: 06022675.0
(22) Anmeldetag: 31.10.2006
(51) Int. Cl.: B60G 21/055

(54) **Anordnung zur Fahrwerksstabilisierung**
Arrangement for chassis stabilisation
Arrangement pour stabiliser le châssis

(30) Priorität: 01.08.2006 DE 102006036120; 30.10.2006 DE 102006051682
(43) Veröffentlichungstag der Anmeldung: 13.02.2008
(73) Patentinhaber: Benteler Automobiltechnik GmbH, 33104 Paderborn (DE)
(72) Erfinder: Hajok, Waldemar, 33609 Bielefeld (DE); Böke, Johannes, 32825 Blomberg (DE); Seibt, Oliver, 33102 Paderborn (DE); Howe, Torsten, 32257 Bünde (DE); Rabe, Frank, 32120 Hiddenhausen (DE)
(74) Vertreter: Griepenstroh, Jörg

(56) Entgegenhaltungen:
- EP-A- 1 514 705
- JP-A- 3 186 424
- JP-A- 3 199 731
- JP-A- 9 030 235
- US-A- 5 791 444
- US-B1- 6 311 811

## Beschreibung

Die Erfindung betrifft eine Anordnung zur Stabilisierung eines Fahrwerks mit den Merkmalen im Oberbegriff des Patentanspruchs 1. Eine solche Anordnung ist aus US-A-6,311,811 bekannt.

Die in der Automobiltechnik eingesetzten Radaufhängungen werden unterschieden in Einzelradaufhängungen und Starr- bzw. Verbundlenkerachsen.

Bei Vorderrad angetriebenen Personenkraftwagen der Unter- und Mittelklasse, hat sich als Achstyp die Verbundlenkerhinterachse durchgesetzt. Dieser Achstyp ermöglicht eine leichte Montage der kompletten Achse, bei einer geringen Anzahl von Bauteilen und bei geringem Raumbedarf. Als kinematische Vorteile sind eine geringe Sturzänderung unter Einfluss von Seitenkräften und eine kaum vorhandene Vorspur- und Spurweitenänderungen bei gleich- und wechselseitigem Einfedern zu nennen.

Als Nachteile sind die Neigung zum Seitenkraftübersteuern aufgrund der Lenkerverformung, ebenso wie die gegenseitige Radbeeinflussung, die schwierige Entkopplung von Schwingungsanregungen durch die Fahrbahn und die begrenzten kinematischen und elastokinematischen Möglichkeiten der Radstellungsbeeinflussung zu nennen.

Das Streben nach besserem Fahrkomfort sowie der dazu im Konflikt stehende Wunsch die Fahrdynamik zu erhöhen, führt zu einem vermehrten Einsatz von Mehrlenkerachsen. Es gibt aber auch aktive Systeme, welche insbesondere im Zusammenhang mit Verbundlenkerachsen, Eigenschaften einzelner Fahrwerkskomponenten entsprechend der Fahrsituation regeln. In diesem Zusammenhang ist es bekannt, aktive Stabilisatoren zu verwenden, die über einen hydraulisch betriebenen Schwenkmotor beeinflussbar sind. Die Schwenkmotoren wandeln hydraulischen Druck in ein Torsionsmoment, bzw. über eine Anbindung an einen Lenker eines Fahrwerks in einen Stabilisierungsmoment um. Der von einer hydraulischen Pumpe erzeugte Druck wird über zwei elektronisch geregelte Druckregelventile dahingehend gesteuert, dass die Wankbewegung des Fahrzeugaufbaus bei Kurvenfahrten minimiert wird.

Es sind auch Systeme bekannt, bei denen spezielle Dämpfer an der Vorderachse und Hinterachse mit Sensoren und einer Steuerelektronik gekoppelt werden. Über ein Proportiorial-Dämpfventil lassen sich die Dämpfkräfte zwischen einem minimalen und einer maximalen Dämpfkraft-Charakteristik stufenlos verstellen. Über die Steuerelektronik wird eine optimale Dämpfkraft errechnet und bereitgestellt. Durch schnelle Erkennung von Zug und Druck, können die jeweils nur tatsächlich benötigten Dämpfungskräfte bereitgestellt werden.

Eine besondere Bedeutung kommt bei der Fahrwerksauslegung der Hinterachse zu, insbesondere im Hinblick auf das dynamische Verhalten des Kraftfahrzeugs. Bei einer Verbundlenkerachse werden die Längslenker über ein Torsionsprofil verbunden, das sich in verschiedenen, frei wählbaren Winkeln einschweißen lässt. Durch die Wahl des Einschweißwinkels und die Wandstärke des Torsionsprofils lässt sich die Rollsteifigkeit einstellen. Eine erhöhte Torsionssteifigkeit der Verbundlenkerhinterachse stabilisiert bei Kurvenfahrt das Fahrzeug durch Verringerung der Rollneigung. Dadurch wird zwar die Fahrsicherheit erhöht, jedoch bei Geradeausfahrt der Fahrkomfort beeinträchtig. Dieser Zielkonflikt wird durch eine aktiv gesteuerte Verbundlenkerachse beseitigt, deren Rollsteifigkeit bei Kurvenfahrt mit hoher Fahrzeuggeschwindigkeit und dann mit hoher Drehbeschleunigung automatisch erhöht und bei Geradeausfahrt oder niedriger Geschwindigkeit auf Komfort optimiert wird. Die Bandbreite der Fahrwerksabstimmung zwischen Komfort und Fahrsicherheit lässt sich dadurch signifikant erhöhen.

Der größte Nachteil der bisher für die Automobiltechnik entwickelten aktiven Wankstabilisierungssysteme liegt in ihrer aufwändigen Funktionsweise und den daraus resultierenden hohen Kosten. Als grundsätzlich nachteilig ist die Art der Energiewandlung in der Aktuatorik zu sehen, bei der zumeist eine aufgeschaltete hydraulische Energie, den erforderlichen Weg und die benötigte Kraft aufbringt. Durch die dazu benötigten Komponenten und die zusätzlich erforderliche Sensorik und Regelelektronik, wird die Verwendung derartiger Wankstabilisierungssysteme bei Verbundlenkerachsen, die in Unter- und Mittelklassefahrzeugen verbaut werden, für Großserienapplikationen wirtschaftlich zu aufwendig.

Hiervon ausgehend liegt der Erfindung die Aufgabe zugrunde, eine Anordnung zur aktiven Fahrwerksstabilisierung aufzuzeigen, welche kompatibel zu unterschiedlichen Achskonstruktionen und insbesondere kompatibel zu Achsen in Verbundlenkerbauweise ist.

Diese Aufgabe ist bei einer Anordnung mit den Merkmalen des Patentanspruchs 1 gelöst.

Vorteilhafte Weiterbildungen des Erfindungsgedankens sind Gegenstand der Unteransprüche.

Es wird eine Anordnung zur Fahrwerksstabilisierung umfassend einen mit einem Stabilisator gekoppelten Aktuator vorgeschlagen, wobei der Aktuator mit Innendruck beaufschlagbare, elastisch verformbare Hohlkörper umfasst, die einerseits drehmomentübertragend zumindest mittelbar an einem Außenprofilteil und andererseits zumindest mittelbar an einem Innenprofilteil abgestützt sind und wobei wenigstens eines der genannten Profilteile Bestandteil des Stabilisators ist. Die Anordnung umfasst also ein äußeres und ein inneres Profilteil, das jeweils für sich genommen torsionssteif ist, und wobei zwischen diesen torsionssteifen Profilteilen eine Aktuatorik integriert ist. Das Innenprofilteil ist mit einer nach innen gerichteten Profilierung versehen. Dementsprechend ist das Außenprofilteil mit einer Außenprofilierung versehen.

Über die Ansteuerung des Aktuators kann das Verdrehen des Stabilisators bzw. die Winkellage zwischen dem Innenprofilteil und dem Außenprofilteil gesteuert werden. Die Ansteuerung kann stufenweise, schaltend oder proportional erfolgen. Durch die Anzahl der elastisch verformbaren Hohlkörper kann auch die Anzahl der Schaltzustände variiert werden, indem nur wenige oder alle Hohlkörper druckbeaufschlagt werden.

Bevorzugt erfolgt jedoch eine proportionale Ansteuerung der einzelnen Hohlkörper, in dem der Innendruck der Hohlkörper variiert wird. Durch Druckänderung des in dem Hohlkörper aufgenommen Mediums bei konstantem Volumen des Hohlkörpers, lässt sich die Steifigkeit der Verbindung zwischen dem Außenprofilteil und dem Innenprofilteil einstellen. Durch die Federwirkung des Aktuators lässt sich im Ergebnis die Torsionssteifigkeit der gesamten Anordnung variieren.

Es wird als besonders vorteilhaft angesehen, wenn der Stabilisator mit wenigstens einem seiner Enden in einem Innenprofilteil in Form einer Stabilisatoranbindung gehalten ist, wobei die Hohlkörper umfangsseitig des Stabilisators angeordnet sind und drehmomentübertragend zumindest mittelbar an der Innenseite des Innenprofilteils abgestützt sind. Eine derartige Stabilisatoranbindung muss natürlich eine Geometrie aufweisen, die für eine Drehmomentübertragung mittels der Hohlkörper geeignet ist. Entweder weist die Stabilisatoranbindung daher selbst eine entsprechende Profilierung auf oder es werden zusätzliche Profilelemente verwendet um die Konturierung des Außenprofilteils und damit die Möglichkeit der Drehmomentübertragung zu verbessern.

Dass wenigstens das Außenprofilteil oder das Innenprofilteil Bestandteil des Stabilisators sein soll, ist so zu verstehen, dass die Profilteile sowohl einstückig mit dem Stabilisator ausgebildet als auch separate Bauteile sein können, die mit dem Stabilisator z. B. formschlüssig verbunden sind. Entscheidend ist die Fähigkeit der Drehmomentübertragung zwischen dem Innenprofilteil und dem Außenprofilteil unter Eingliederung der mit Innendruck beaufschlagbaren Hohlkörper.

Bei einer Aktuatorik, die beispielsweise nur an einem Ende bzw. Stabilisatorflansch des Stabilisators angebracht ist, kann an dem anderen Ende, d. h. der passiven Seite des Stabilisators, eine feste Verbindung zwischen dem Außenprofil und dem Innenprofil ausgebildet sein. Der Aktuator kann aber auch entfernt von den Enden des Stabilisators angeordnet sein und zwischen einen ersten und einen zweiten Stabilisatorabschnitt geschaltet werden. Auch bei derartigen, geteilten Stabilisatoren kommen die Vorteile der erfindungsgemäßen Anordnung zum Tragen, da der hydraulische Druck nicht von einer externen Pumpe erzeugt werden muss, sondern selbsttätig durch Einleitung eines Drehmoments in diese Hydraulik-Drehkupplung erzeugt wird.

Die Hohlkörper können derart abgestützt sein, dass die Verformung des Hohlkörpers drehrichtungsabhängig ist. Das heißt, dass bei einer Drehung im Uhrzeigersinn, eine erste Menge von Hohlkörpern stärker belastet wird als eine zweite Menge von Hohlkörpern, die dafür im Gegenzug entlastet wird. Bei Drehrichtungsumkehr würde der umgekehrte Fall eintreten, d. h. in den zuvor entlasteten Hohlkörpern würde sich nunmehr ein höherer Innendruck aufbauen. Der höhere Innendruck stellt sich durch die unterschiedliche Relativlage des Stabilisators gegenüber der Stabilisatoranbindung ein.

Diesen Effekt macht sich die Erfindung dadurch zu Nutze, dass Hohlkörper, deren Innenvolumen beim Verdrehen des Innenprofilteils gegenüber dem Außenprofilteil unterschiedlich verändert wird, über wenigstens eine Ausgleichsleitung fluidleitend miteinander verbunden sind, wobei die Durchflussmenge der Ausgleichsleitung durch wenigstens ein Ventil aktiv steuerbar ist. Bei dieser Konfiguration wird der für die Erhöhung der Torsionssteifigkeit erforderliche Druck durch hemmen oder blockieren des Mediumaustauschs zwischen den miteinander verbundenen, elastisch verformbaren Hohlkörperpaaren semiaktiv über ein Ventil aufgebaut. Wichtig ist, dass bei dieser Konstellation lediglich das Ventil angesteuert werden muss. Ein eigenständiges Hydraulikaggregat, um den Innendruck in einzelnen Hohlkörpern zu erhöhen, aufrecht zu erhalten oder abzusenken, ist nicht erforderlich. Es erfolgt daher keine externe Energieversorgung des Aktuators. Lediglich das Ventil muss angesteuert werden.

Über die Ventile lässt sich die Durchflussmenge und damit auch das Druckniveau in den einzelnen Hohlkörpern einstellen. Ein geschlossenes Ventil und der damit unterbundene Austausch des Mediums, bewirkt den höchsten Druck in den Hohlkörpern und somit eine hohe Verdrehsteifigkeit des Stabilisators.

Alternativ ist es selbstverständlich denkbar, dass der Innendruck, wenigstens eines Hohlkörpers, über eine an den Hohlkörper angeschlossene Druckleitung aktiv steuerbar ist. Durch die Druckbeaufschlagung der einzelnen Hohlkörper erfolgt eine externe Energieversorgung, sodass die Verdrehsteifigkeit durch Zuführung von Fremdenergie aktiv einstellbar ist.

Grundsätzlich ist es zweckmäßig mehrere der elastisch verformbaren Hohlkörper vorzusehen. Die Hohlkörper können als Bälge konfiguriert sein. Zweckmäßig ist aber auch die Verwendung schlauchförmig konfigurierter Hohlkörper, die achsparallel zu dem Stabilisator verlaufen und vorzugsweise gleichmäßig über den Umfang des Stabilisators verteilt angeordnet sind.

Je nach Konfiguration der Stabilisatoranbindung, können die Hohlkörper ausschließlich in einem Außenprofilteil gekammert sein, das an dem Stabilisator befestigt ist. Es ist aber auch möglich an dem Außenprofilteif und an dem Innenprofilteil Taschen zur Aufnahme der Hohlkörper auszubilden, sodass die Hohlkörper teils in den Taschen des Außenprofilteils und teils in dem Innenprofilteil gekammert sind.

Die erfindungsgemäße Anordnung zur Fahrwerkstabilisierung kann im Bereich der Hydraulik-Drehkupplung nicht nur ausschließlich Rotationskräfte aufnehmen. Es ist denkbar, dass zwischen dem Innenprofilteil und dem Außenprofilteil Lagerelemente zur Aufnahme radial angreifender, als auch zur Aufnahme axial angreifender Kräfte angeordnet sind, um hier eine zusätzliche Dämpfung herbeizuführen. Grundsätzlich ist es auch möglich kardanische Kräfte durch diese Lagerelemente aufzunehmen.

Die erfindungsgemäße Anordnung zur Fahrwerksstabilisierung kann gewissermaßen als externe Stabilisationseinrichtung bei Vorder- und Hinterachsen zum Einsatz kommen. Als besonders vorteilhaft wird es angesehen, wenn die Anordnung bei einer Verbundlenkerachse zum Einsatz kommt. In diesem Fall kann der Stabilisator in einem die Längslenker der Verbundlenkerachse miteinander verbindenden Querträger angeordnet sein, wobei das Innenprofil in Form einer Stabifisatoranbindung Bestandteil des Querträgers ist. Mit anderen Worten ist es nicht erforderlich, eine Stabilisatoranbindung als separates Profilbauteil vorzusehen. Die Stabilisatoranbindung kann durch einen Bereich des den Stabilisator umgebenden Querträgers selbst gebildet sein. Diese Integration in eine Verbundlenkerachse ist besonders Bauraum sparend und erfordert nur sehr wenige zusätzliche Bauteile.

Als besonders vorteilhaft wird es angesehen, wenn die Stabilisatoranbindung des Querträgers innerhalb des Längslenkers liegt. Da die Stabilisatoranbindung von dem Querträger selbst gebildet ist und dieser wiederum in dem Längslenker gehalten ist, befindet sich auch der Aktuator im Bereich des Längslenkers, sodass für den Aktuator in Fahrzeugquerrichtung kein zusätzlicher Bauraum erforderlich ist. Der Aktuator ist vollständig in die Stabilisatoranbindung bzw. den Längslenker und damit auch in den Querträger integrierbar. Der Aufbau einer solchen Anordnung zur Fahrwerkstabilisierung ist daher einfach und vergleichsweise kostengünstig, da auch der Montageaufwand gering ist.

Selbstverständlich ist es auch möglich den Stabilisator und den damit gekoppelten Aktuator außerhalb eines die Längslenker einer Verbundlenkerachse miteinander verbindenden Querträgers anzuordnen. Die erfindungsgemäße Anordnung zur Fahrwerksstabilisierung ist nicht auf den Anwendungsfall einer Verbundlenkerachse beschränkt, sondern sieht grundsätzlich auch die Verwendung in Kombination mit anderen Achstypen, wie z. B. in Kombination mit Doppelquerlenker- bzw. Mehrlenkerachsen vor. Der Einsatz eines semiaktiven Stabilisators ist damit sowohl im Bereich der Vorderachse als auch im Bereich der Hinterachse als Wankstabilisator denkbar.

Die Erfindung wird nachfolgend anhand von in den schematischen Zeichnungen dargestellten Ausführungsbeispielen näher erläutert. Es zeigt:
- Figur 1: eine perspektivische Ansicht einer Verbundlenkerachse mit der erfindungsgemäßen Anordnung zur Fahrwerkstabilisierung;
- Figur 2: in vergrößerter Darstellung eine perspektivische Ansicht der erfindungsgemäßen Anordnung zur Fahrwerkstabilisierung im Teilschnitt;
- Figur 3: eine weitere Ausführungsform einer Anordnung zur Fahrwerkstabilisierung in perspektivischer Ansicht und im Teilschnitt;
- Figur 4: eine weitere Ausführungsform eines Aktuators;
- Figur 5: die Ausführungsform der Figur 4 als semiaktive Variante;
- Figur 6: eine mögliche Ausführungsform einer Verbundlenkerachse mit außerhalb des Querträgers angeordnetem, zweiteiligen Stabilisator,
- Figur 7: in vergrößerter Darstellung den Bereich des Aktuators aus Figur 6 und
- Figur 8: eine weitere Ausführungsform einer Achse in Kombination mit dem erfindungsgemäßen Aktuator.

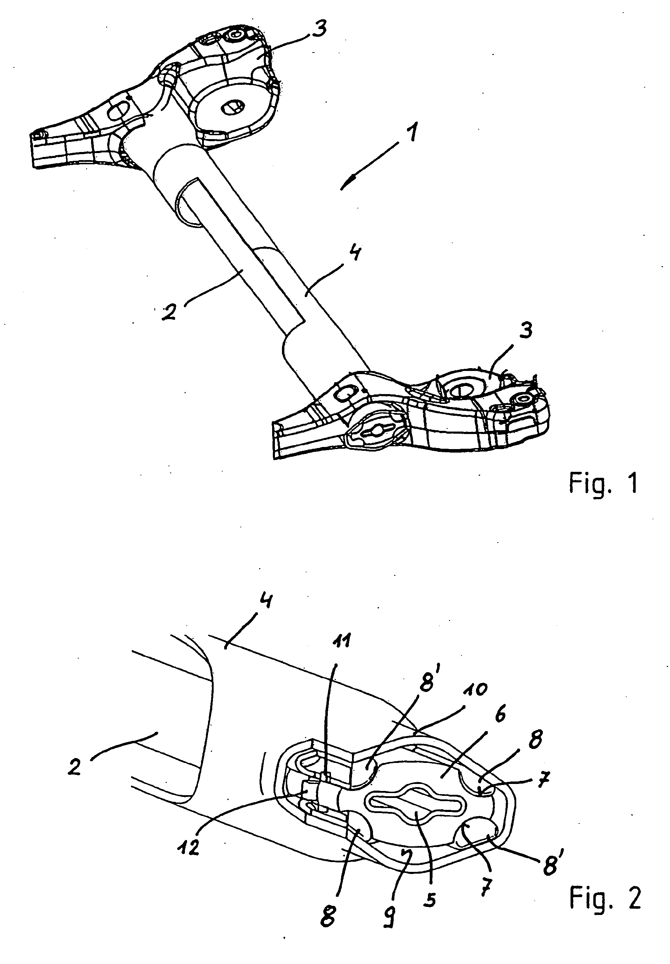

Figur 1 zeigt eine Verbundlenkerachse 1, bei welcher ein Stabilisator 2 innerhalb eines Längslenker 3 miteinander verbindenden Querträgers 4 angeordnet ist.

Figur 2 zeigt in vergrößerter Darstellung ein Ende 5 des als Hohlprofil ausgeführten Stabilisators 2, das auch als Stabilistatorflansch bezeichnet werden kann. Das Ende 5 des Stabilisators 2 ist im Unterschied zur im Übrigen kreisförmigen Profilierung des Stabilisators 2 unrund profiliert und zwar in der Art eines Schlüssellochs für einen zweibärtigen Schlüssel. Diese unrunde Geometrie ermöglicht eine formschlüssige Drehmomentübertragung auf ein auf das Ende 5 des Stabilisators 2 aufgesetztes Außenprofilteil 6, das mit seinem Innenquerschnitt an die Außengeometrie des Endes 5 des Stabilisators 2 angepasst ist. Das Außenprofilteil 6 ist im Wesentlichen rechteckig konfiguriert, allerdings mit jeweils im Eckbereich angeordneten konkaven Taschen 7, in denen jeweils ein schlauchförmiger, elastisch verformbarer Hohlkörper 8, 8' angeordnet ist. Die Hohlkörper 8, 8' stützen sich wiederum an der Innenseite 9 einem in diesem Ausführungsbeispiel im Querschnitt rautenähnlich konfigurierten Innenprofil 10 in Form einer Stabilisatoranbindung ab. Das Innenprofilteil 10 ist kein separates Bauteil, sondern ein Endabschnitt des im Übrigen kreisrund konfigurierten Querträgers 4, in welchem der Stabilisator 2 verläuft. Dieser Endabschnitt dient nicht nur als Innenprofilteil 10 und Anbindung für den Stabilisator 2, sondern gleichzeitig auch zur Fixierung des Längslenkers 3 an dem Querträger 4, wie es in Figur 1 dargestellt ist. Wenn es nun zu einer Verdrehung zwischen dem Stabilisator 2 und dem Innenprofilteil 10 kommt, wird die im Bereich des Endes 5 des Stabilisators 2 zu übertragende Kraft unmittelbar in den jeweiligen Längslenker 3 übertragen.

Die einzelnen Hohlkörper 8, 8' sind mit Fluid gefüllt und zwar bevorzugt mit einem umweltverträglichen Fluid unter vergleichsweise geringem Druck. Die Fluidmenge aller Hohlkörper 8, 8' bleibt konstant. Allerdings ist eine Ausgleichsleitung 11 vorgesehen, welche jeweils zwei Hohlkörper 8, 8' miteinander verbindet. Die Ausgleichsleitung 11 ist über ein aktiv angesteuertes Ventil 12 sperrbar, so dass der Fluidübertritt von dem einen Hohlkörper 8 zu dem anderen Hohlkörper 8' gesteuert werden kann.

In dem Ausführungsbeispiel der Figuren 1 und 2 sind die Hohlkörper 8, 8' so angeordnet, dass es bei einem Verdrehen des Stabilisators 2 gegenüber dem Innenprofilteil 10 zu einer ungleichmäßigen Belastung der Hohlkörper 8, 8' kommt. Eine Drehung des Stabilisators 2 im Uhrzeigersinn würde dazu führen, dass die mit dem Bezugszeichen 8 gekennzeichneten Hohlkörper entlastet werden, während die gegenüberliegenden Hohlkörper 8' belastet werden. Dies führt zu einem Druckanstieg in den Hohlkörpern 8'. Dieser Druckanstieg kann bei geschlossenem Ventil 12 aufrechterhalten werden. Dadurch ist die Torsionssteifigkeit der. Verbundlenkerachse 1 hoch. Wenn das Ventil 12 hingegen geöffnet wird, kann das Fluid aus den Hohlkörpern 8' in den über die Ausgleichsleitung 11 angeschlossenen korrespondierenden Hohlkörper 8 einströmen, so dass die Torsionssteifigkeit herabgesetzt wird. Bei einer Verdrehung entgegen dem Uhrzeigersinn verhält sich dies genau umgekehrt. Die Verformung der Hohlkörper 8, 8' bei einem Verdrehen des Stabilisators 2 gegenüber dem Innenprofilteil 10 ist daher drehrichtungsabhängig.

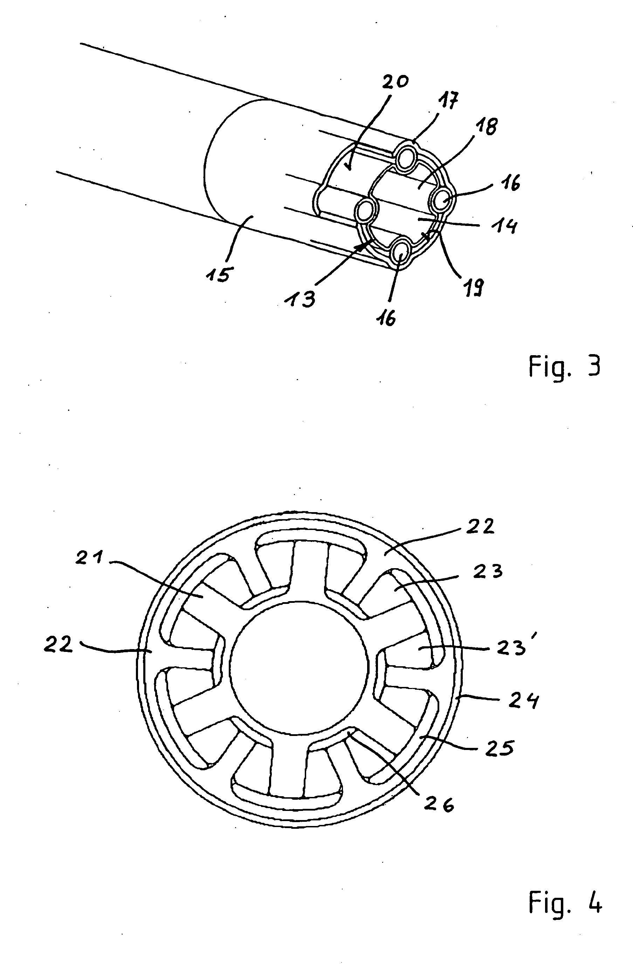

Eine drehrichtungsunabhängige Lagerung der Hohlkörper ist in dem Ausführungsbeispiel der Figur 3 gezeigt. Figur 3 zeigt eine perspektivische Ansicht eines Stabilisators 13, dessen Ende 14 in einem Innenprofilteil 15 in Form einer Stabilisatoranbindung liegt. Bei diesem Ausführungsbeispiel sind vier schlauchförmige Hohlkörper 16 gleichmäßig über den Umfang des Stabilisators 13 verteilt. Sowohl der Stabilisator 13 als auch das Innenprofilteil 15 sind im Endbereich hinsichtlich der Grundgeometrie kreisrund gestaltet, wobei lediglich im Bereich der Hohlkörper 16 Taschen 17, 18 sowohl in dem Innenprofilteil 15, als auch in dem als Hohlprofil gestalteten Stabilisator 13 zu sehen sind.

In nicht näher dargestellter Weise ist jeder der Hohlkörper 16 mit einer Druckleitung verbunden, über welche der Innendruck der Hohlkörper 16 aktiv steuerbar ist. Bei dieser Konfiguration wird der Innendruck der Hohlkörper 16 nicht durch die Relativbewegung zwischen Stabilisator 13 und dem Innenprofilteil 15 erzeugt, sondern kann auch ohne Relativbewegung in einer Größenordnung aufgebaut werden, die sowohl eine sehr torsionssteife als auch eine ausgesprochen torsionsweiche Anbindung zwischen dem Stabilisator 13 und dem Innenprofilteil 15 ermöglicht.

In diesem Ausführungsbeispiel sind die Hohlkörper 16 unmittelbar an der Innenseite 19 des Innenprofilteils 15 bzw. an der Außenseite 20 des Stabilisators 13 abgestützt. Selbstverständlich ist es im Rahmen der Erfindung möglich, etwaige Zwischenlagen oder Mitnehmer vorzusehen, so dass die Hohlkörper 16 nicht über unmittelbaren Kontakt, sondern nur mittelbar an den sich relativ verlagernden Bauteilen abgestützt sind. Entscheidend ist die Fähigkeit der Hohlkörper 16, ein Drehmoment zwischen beiden Bauteilen zu übertragen.

Die Ausführungsform der Figur 4 zeigt einen Querschnitt durch eine Aktuatoranordnung, bei welchem ein Außenprofilteil 21 mit sechs radial nach außen weisenden Stegen versehen ist und wobei ein Innenprofilteil 22 ebenfalls mit sechs radial nach innen ragenden Stegen versehen ist, wobei zwischen den Stegen des Außenprofilteils 21 und des Innenprofilteils 22 jeweils Hohlkörper 23, 23' angeordnet sind. Das Innenproflteil 22 ist verdrehsteif in einer Hülse 24 aufgenommen, während das Außenprofilteil 21 in nicht näher dargestellter Weise mit einem Stabilisator drehsteif verbunden ist. Im Unterschied zu den vorhergehenden Ausführungsformen befinden sich zwischen dem Außenprofilteil 21 und dem Innenproflteil 22 schalenförmige Lagerelemente 25, 26, die sich in Umfangsrichtung jeweils über die Stege des Innenprofilteils 22 bzw. Außenprofilteils 21 hinweg erstrecken, so dass über die Lagerelemente 25, 26 radial angreifende Kräfte aufgenommen werden können.

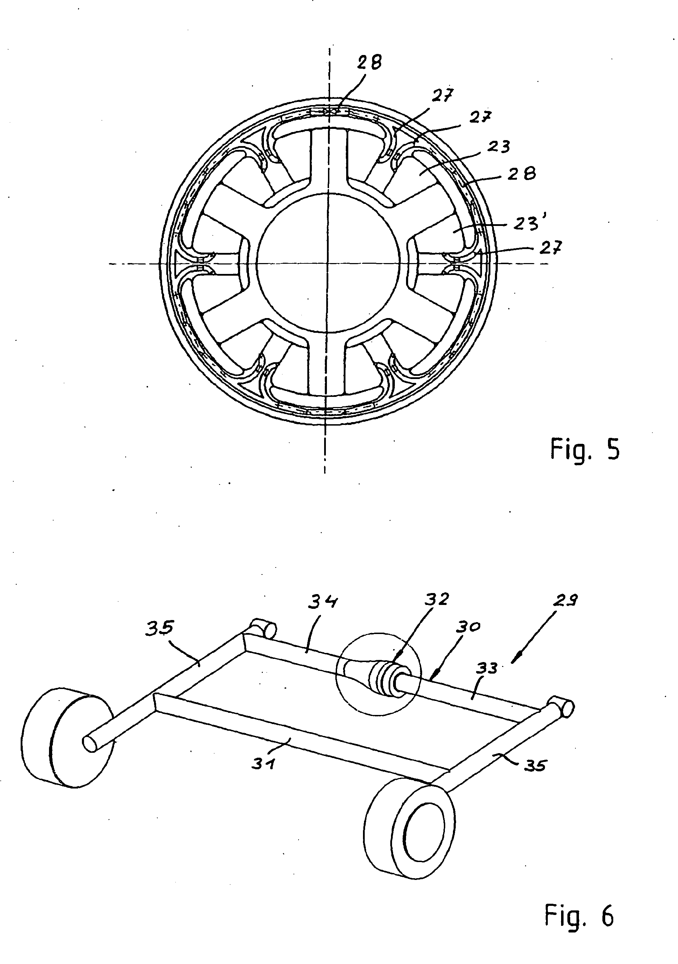

In der Darstellung der Figur 5 wurden zusätzlich Ausgleichsleitungen 27 eingezeichnet, die jeweils zwei auf gegenüberliegenden Seiten eines Stegs angeordnete Hohlkörper 23, 23' miteinander verbinden. Über die Ausgleichsleitung 27 kann das Fluid jeweils von der eingedrückten Hohlkammer 23 in die jeweils andere Kammer 23' des Hohlkammerpaares übertreten. Über den Durchfluss des Ventils 28 lässt sich somit der Fluidaustausch und folglich die Steifigkeit der Hydraulik-Drehkupplung variieren.

Figur 6 zeigt eine Ausführungsform einer Verbundlenkerachse 29, bei welcher der Stabilisator 30 parallel zu und außerhalb eines Querträgers 31 verläuft. Bei diesem Ausführungsbeispiel ist der Aktuator 32 entfernt von den Enden des Stabilisators 30 angeordnet und befindet sich zwischen einem ersten Stabilisatorabschnitts 33 und einem zweiten Stabilisatorabschnitts 34. Die Enden der Stabilisatorabschnitte 33, 34 sind fest mit den Längslenkern 35 der Verbundlenkerachse 29 verbunden.

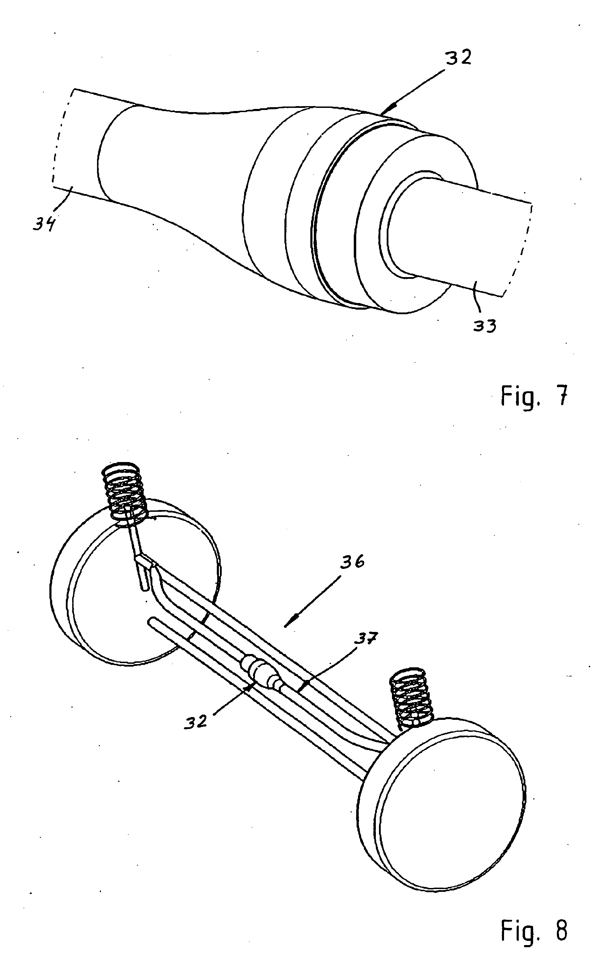

Figur 7 zeigt in vergrößerter Darstellung den Aktuator 32, dessen innerer Aufbau anhand der Figuren 4 und 5 bereits erläutert worden ist. Im Wesentlichen handelt es sich bei einem derartig gestalteten Stabilisator 30 um begrenzt verdrehbar miteinander gekoppelte Torsionsrohre, von denen eines mit einem Innenprofilteil 22 wie es in den Figuren 4 und 5 dargestellt ist und eines mit einem Außenprofilteil 21 gekoppelt ist. Die ganze Anordnung erfolgt gekapselt und erfordert nur sehr wenig Bauraum.

Ein weiteres Ausführungsbeispiel für die erfindungsgemäße Anordnung ist in Figur 8 dargestellt. Es ist eine Doppelquerlenkerachse dargestellt, mit einem sich parallel zu den Querträgern erstreckenden Stabilisator 37, der wiederum mit dem Aktuator 32 versehen ist. Die Funktionsweise des Aktuators wurde vorstehend bereits mehrfach erläutert.

### Bezugszeichen:

- 1: Verbundlenkerachse
- 2: Stabilisator
- 3: Längslenker
- 4: Querträger
- 5: Ende
- 6: Außenprofilteil
- 7: Tasche
- 8: Hohlkörper
- 8': Hohlkörper
- 9: Innenseite
- 10: Innenprofilteil
- 11: Ausgleichsleitung
- 12: Ventil
- 13: Stabilisator
- 14: Ende
- 15: Innenprofilteil
- 16: Hohlkörper
- 17: Tasche
- 18: Tasche
- 19: Innenseite
- 20: Außenseite
- 21: Außenprofilteil
- 22: Innenprofilteil
- 23: Hohlkörper
- 23': Hohlkörper
- 24: Hülse
- 25: Lagerelement
- 26: Lagerelement
- 27: Ausgleichsleitung
- 28: Ventil
- 29: Verbundlenkerachse
- 30: Stabilisator
- 31: Querträger
- 32: Aktuator
- 33: erster Stabilisatorabschnitt
- 34: zweiter Stabilisatorabschnitt
- 35: Längslenker
- 36: Doppelquerlenkerachse
- 37: Stabilisator

## Patentansprüche

1. Anordnung zur Fahrwerksstabilisierung, umfassend einen mit einem Stabilisator (2, 13, 30, 37) gekoppelten Aktuator (32), **dadurch gekennzeichnet, dass** der Aktuator (32) mit Innendruck beaufschlagbare, elastisch verformbare Hohlkörper (8, 8', 16, 23, 23') umfasst, die einerseits drehmomentübertragend zumindest mittelbar an einem Außenprofilteil (6, 21) und andererseits zumindest mittelbar an einem Innenprofilteil (10, 15, 22) abgestützt sind, wobei wenigstens eines der genannten Profilteile (6, 21, 22) Bestandteil des Stabilisators (2, 13, 30, 37) ist.

2. Anordnung nach Anspruch 1, **dadurch gekennzeichnet, dass** der Stabilisator (2, 13) mit wenigstens einem seiner Enden (5, 14) in einem Innenprofilteil (10, 15) in Form einer Stabilisatoranbindung gehalten ist, wobei die Hohlkörper (8, 8', 16) umfangsseitig des Stabilisators (2, 13) angeordnet sind und drehmomentübertragend zumindest mittelbar an der Innenseite (9, 19) des Innenprofilteils (10, 15) abgestützt sind.

3. Anordnung nach Anspruch 1 oder 2, **dadurch gekennzeichnet, dass** das Außenprofilteil (6, 21) ein separates, mit dem Stabilisator verbundenes Bauteil ist.

4. Anordnung nach Anspruch 1 oder 2, **dadurch gekennzeichnet, dass** das Außenprofilteil einstückiger Bestandteil des Stabilisators ist.

5. Anordnung nach einem der Ansprüche 1 bis 4, **dadurch gekennzeichnet, dass** der Aktuator (32) entfernt von den Enden des Stabilisators (2) angeordnet ist und zwischen einen ersten und einen zweiten Stabilisatorabschnitt (33, 34) geschaltet ist.

6. Anordnung nach einem der Ansprüche 1 bis 5, **dadurch gekennzeichnet, dass** eine das Innenvolumen verändernde Verformung der Hohlkörpers (8, 8', 23, 23') bei einem Verdrehen des Innenprofilteils (10, 22) gegenüber dem Außenprofilteil (6, 21) drehrichtungsabhängig ist.

7. Anordnung nach Anspruch 6, **dadurch gekennzeichnet, dass** Hohlkörper (8, 8', 23, 23'), auf die beim Verdrehen des Innenprofilteils (10, 22) gegenüber dem Außenprofilteil (6, 21) unterschiedliche Drücke ausgeübt werden, über wenigstens eine Ausgleichsleitung (11,27) fluidleitend miteinander verbunden sind, wobei die Durchflussmenge der Ausgleichsleitung (11, 27) durch wenigstens ein Ventil (12, 28) aktiv steuerbar ist.

8. Anordnung nach einem der Ansprüche 1 bis 7, **dadurch gekennzeichnet, dass** der Innendruck wenigstens eines Hohlkörpers (16) über eine an den Hohlkörper (16) angeschlossene Druckleitung aktiv steuerbar ist.

9. Anordnung nach einem der Ansprüche 1 bis 8, **dadurch gekennzeichnet, dass** die Hohlkörper (8, 8', 16, 23, 23') schlauchförmig konfiguriert sind.

10. Anordnung nach einem der Ansprüche 1 bis 9, **dadurch gekennzeichnet, dass** zwischen dem Innenprofilteil (22) und dem Außenprofilteil (21) Lagerelemente (25,26) zur Aufnahme radial angreifender Kräfte angeordnet sind.

11. Anordnung nach einem der Ansprüche 1 bis 10, **dadurch gekennzeichnet, dass** zwischen dem Innenprofilteil (22) und dem Außenprofilteil (21) Lagerelemente zur Aufnahme axial angreifender Kräfte angeordnet sind.

12. Anordnung nach einem der Ansprüche 1 bis 11, **dadurch gekennzeichnet, dass** in dem Innenprofilteil (15) Taschen (17, 18) zur Aufnahme der Hohlkörper (16) ausgebildet sind.

13. Anordnung nach einem der Ansprüche 1 bis 12, **dadurch gekennzeichnet, dass** die Hohlkörper (16, 23, 23') gleichmäßig über den Umfang des Außenprofilteils (21) verteilt angeordnet sind.

14. Anordnung nach einem der Ansprüche 1 bis 13, **dadurch gekennzeichnet, dass** der Stabilisator (2) in einem die Längslenker (3) einer Verbundlenkerachse (1) miteinander verbindenden Querträger (4) angeordnet ist, wobei das Innenprofilteil (10, 15) in Form der Stabilisatoranbindung Bestandteil des Querträgers (4) ist.

15. Anordnung nach Anspruch 14, **dadurch gekennzeichnet, dass** das Innenprofilteil (10) in Form der Stabilisatoranbindung des Querträgers (4) innerhalb des Längslenkers (3) liegt.

16. Anordnung nach einem der der Ansprüche 1 bis 15, **dadurch gekennzeichnet, dass** der Stabilisator (30, 37) außerhalb eines die Längslenkers (35) einer Verbundlenkerachse (29) miteinander verbindenden Querträgers (4) angeordnet ist.

## Claims

1. Arrangement for chassis stabilisation containing an actuator (32) coupled to a stabiliser (2, 13, 30, 37), **characterised in that** the actuator (32) contains elastically-deformable hollow bodies (8, 8', 16, 23, 23') acted upon by inner pressure, which on one side are supported at least indirectly on an outer profile part (6, 21) in such a way as to transmit torque and on the other side are supported at least indirectly on an inner profile part (10, 15, 22), at least one of said profile parts (6, 21, 22) being a component part of the stabiliser (2, 13, 30, 37).

2. Arrangement according to claim 1, **characterised in that** the stabiliser (2, 13) is held by at least one its ends (5, 14) in an inner profile part (10, 15) in the form of a stabiliser link, the hollow bodies (8, 8', 16) being arranged at the periphery of the stabiliser (2, 13) and being supported in such a way as to transmit torque, at least indirectly, on the inner side (9, 19) of the inner profile part (10, 15).

3. Arrangement according to claim 1 or 2, **characterised in that** the outer profile part (6, 21) is a separate component linked to the stabiliser.

4. Arrangement according to claim 1 or 2, **characterised in that** the outer profile part is a one-piece component of the stabiliser.

5. Arrangement according to one of claims 1 to 4, **characterised in that** the actuator (32) is arranged at a distance from the ends of the stabiliser (2) and is connected between a first and a second stabiliser section (33, 34).

6. Arrangement according to one of claims 1 to 5, **characterised in that** any deformation of the hollow bodies (8, 8', 23, 23') modifying the inner volume when there is distortion of the inner profile part (10, 22) in relation to the outer profile part (6, 21) depends on the direction of rotation.

7. Arrangement according to claim 6, **characterised in that** hollow bodies (8, 8', 23, 23') on which varying pressures are exerted when there is distortion of the inner profile part (10, 22) in relation to the outer profile part (6, 21) are linked to each other in such a way as to conduct fluid via at least one balancing line (11, 27), the rate of flow of the balancing line (11, 27) being actively controllable by at least one valve (12, 28).

8. Arrangement according to one of claims 1 to 7, **characterised in that** the inner pressure of at least one hollow body (16) is actively controllable via a pressure line connected to the hollow body (16).

9. Arrangement according to one of claims 1 to 8, **characterised in that** the hollow bodies (8, 8', 16, 23, 23') are configured in the form of flexible tubes.

10. Arrangement according to one of claims 1 to 9, **characterised in that** bearing members (25, 26) are arranged between the inner profile part (22) and the outer profile part (21) to absorb radially-acting forces.

11. Arrangement according to one of claims 1 to 10, **characterised in that** bearing members are arranged between the inner profile part (22) and the outer profile part (21) to absorb axially-acting forces.

12. Arrangement according to one of claims 1 to 11, **characterised in that** pockets (17, 18) are formed in the inner profile part (15) to house the hollow bodies (16).

13. Arrangement according to one of claims 1 to 12, **characterised in that** the hollow bodies (16, 23, 23') are arranged in an even distribution over the periphery of the outer profile part (21).

14. Arrangement according to one of claims 1 to 13, **characterised in that** the stabiliser (2) is arranged in a transverse beam (4) linking the longitudinal control arms (3) of a torsion beam axle (1), the inner profile part (10, 15) being a component of the transverse beam (4) in the form of the stabiliser link.

15. Arrangement according to claim 14, **characterised in that** the inner profile part (10) in the form of the stabiliser link of the transverse beam (4) lies within the longitudinal control arm (3).

16. Arrangement according to one of claims 1 to 15, **characterised in that** the stabiliser (30, 37) is arranged outside a transverse beam (4) linking the longitudinal control arms (35) of a torsion beam axle (29).

## Revendications

1. Agencement pour la stabilisation d'un châssis, comprenant un actionneur (32) couplé à un stabilisateur (2, 13, 30, 37), **caractérisé en ce que** l'actionneur (32) comprend des corps creux (8, 8', 16, 23, 23') élastiquement déformables susceptibles d'être alimentés avec une pression intérieure, qui sont soutenus d'une part au moins indirectement sur une pièce profilée extérieure (6, 21) et d'autre part au moins indirectement sur une pièce profilée intérieure (10, 15, 22) de façon à transmettre un couple de rotation, l'une au moins desdites pièces profilées (6, 21, 22) étant une partie constitutive du stabilisateur (2, 13, 30, 37).

2. Agencement selon la revendication 1, **caractérisé en ce que** le stabilisateur (2, 13) est maintenu par l'une au moins de ses extrémités (5, 14) dans une pièce profilée intérieure (10, 15) sous la forme d'une jonction de stabilisateur, lesdits corps creux (8, 8', 16) étant agencés à la périphérie du stabilisateur (2, 13) et soutenus au moins indirectement contre la face intérieure (9, 19) de la pièce profilée intérieure (10, 15) de façon à transmettre un couple de rotation.

3. Agencement selon la revendication 1 ou 2, **caractérisé en ce que** la pièce profilée extérieure (6, 21) est un composant séparé relié au stabilisateur.

4. Agencement selon la revendication 1 ou 2, **caractérisé en ce que** la pièce profilée extérieure est une partie constitutive d'un seul tenant du stabilisateur.

5. Agencement selon l'une des revendications 1 à 4, **caractérisé en ce que** l'actionneur (32) et agencé à distance des extrémités du stabilisateur (2) et est monté entre un premier tronçon et un second tronçon (33, 34) du stabilisateur.

6. Agencement selon l'une des revendications 1 à 5, **caractérisé en ce qu'**une déformation des corps creux (8, 8', 23, 23'), qui fait varier le volume intérieur lors d'une rotation de la pièce profilée intérieure (10, 22) par rapport à la pièce profilée extérieure (6, 21) est dépendante du sens de rotation.

7. Agencement selon la revendication 6, **caractérisé en ce que** des corps creux (8, 8', 23, 23'), sur lesquels des pressions différentes sont exercées lors de la rotation de la pièce profilée intérieure (10, 22) par rapport à la pièce profilée extérieure (6, 21), sont reliés les uns aux autres de manière à conduire les fluides via au moins une conduite de compensation (11, 27), la quantité de fluide traversant la conduite de compensation (11, 27) pouvant être commandée de façon active par au moins une soupape (12, 28).

8. Agencement selon l'une des revendications 1 à 7, **caractérisé en ce que** la pression intérieure de l'un au moins des corps creux (16) peut être commandée de façon active via une conduite de pression raccordée au corps creux (16).

9. Agencement selon l'une des revendications 1 à 8, **caractérisé en ce que** les corps creux (8, 8', 16, 23, 23') sont configurés à la manière de tuyaux souples.

10. Agencement selon l'une des revendications 1 à 9, **caractérisé en ce que** des éléments de montage (25, 26) destinés à encaisser des forces agissant radialement son agencés entre la pièce profilée intérieure (22) et la pièce profilée extérieure (21).

11. Agencement selon l'une des revendications 1 à 10, **caractérisé en ce que** des éléments de montage destinés à encaisser des forces agissant axialement sont agencés entre la pièce profilée intérieure (22) et la pièce profilée extérieure (21).

12. Agencement selon l'une des revendications 1 à 11, **caractérisé en ce que** des poches (17, 18) pour recevoir les corps creux (16) sont réalisées dans la pièce profilée intérieure (15).

13. Agencement selon l'une des revendications 1 à 12, **caractérisé en ce que** les corps creux (16, 23, 23') sont agencés en répartition régulière sur la périphérie de la pièce profilée extérieure (21).

14. Agencement selon l'une des revendications 1 à 13, **caractérisé en ce que** le stabilisateur (2) et agencé dans une traverse (4) qui relie l'un à l'autre les bras longitudinaux (3) d'un essieu directeur composite (1), la pièce profilée intérieure (10, 15), sous la forme de la jonction de stabilisateur, étant une partie constitutive de la traverse (4).

15. Agencement selon la revendication 14, **caractérisé en ce que** la pièce profilée intérieure (10), sous la forme de la jonction de stabilisateur de la traverse (4), est située à l'intérieur du bras longitudinal (3).

16. Agencement selon l'une des revendications 1 à 15, **caractérisé en ce que** le stabilisateur (30, 37) est agencé à l'extérieur d'une traverse (4) qui relie l'un à l'autre les bras longitudinaux (35) d'un essieu directeur composite (29).
